# EUROPEAN PATENT APPLICATION

(11) **EP 4 826 673 A1**
(43) Date of publication of application: **21.10.2026**
(21) Application number: 25305566.9
(22) Date of filing: 17.04.2025
(51) Int. Cl.: G06V 10/778, G06V 10/20

(54) **METHOD FOR SELECTING IMAGES IN A SET OF IMAGES**

(71) Applicant: BULL SAS, 78340 Les Clayes-Sous-Bois (FR)
(72) Inventor: WINCKLER, Nicolas, 38190 VILLARD BONNOT (FR); FERRANDO DEL RINCON, German, 28006 MADRID (ES); MORIN, Guillaume, 38000 GRENOBLE (FR)
(74) Representative: IPAZ

(57) **Abstract**

The invention relates to a method (40) for selecting images in a target image set (14) including at least one image, the method comprising:
- for each image:
• providing said image to an object detection model (10), an output including, for each detected object, an inferred class and an inferred bounding box;
• for each detected object, computing a class uncertainty based on:
∘ a value of a predetermined uncertainty heuristic; and
∘ at least one class-related quantile (q_{c});

• for each detected object, computing bounding box uncertainties based on:
∘ a prediction set of classes; and
∘ at least one bounding box-related quantile (q_{b});

• computing an image uncertainty score based on the class uncertainty and the bounding box uncertainties computed for at least one detected object of said image;

- selecting each image of the target dataset (14) having an image uncertainty score that satisfies a predetermined criterion.

## Description

### Field of the invention

The present invention relates to a computer-implemented method for selecting images in a target image set based on an object detection model, the target image set including at least one image.

The invention further relates to a computer program and to a computing system.

The invention applies to the field of computer science, and more specifically to the field of object detection.

### Background

In the context of machine learning for object detection, the primary challenge lies in selecting the most informative and representative images from a large pool of unlabeled data, in order to maximize the efficiency of the annotation for model training.

Known image selection methods usually rely on uncertainty metrics (e.g., entropy or margin-based confidence) or diversity-based heuristics.

For example, uncertainties are mostly computed from the following heuristics:
- entropy on the confidence score relating to the detected objects;
- Monte Carlo dropout, deep ensemble, Bayesian inference, attenuation loss.

However, such methods are not entirely satisfactory.

Indeed, such methods are generally computationally expensive (e.g., deep ensemble or Bayesian inference), suboptimal and/or or require retraining (attenuation loss).

Furthermore, such methods do not provide a formal guarantee or assurance regarding estimation quality.

A purpose of the present invention is to overcome at least one of these drawbacks.

Another purpose of the invention is to provide a method that is reliable, as well as time and resource-efficient.

### Summary of the invention

To this end, the present invention is a method of the aforementioned type, comprising:
- for each image of the target image set:
   - providing said image as input to the object detection model, an output of the object detection model including, for each object detected in said image, a corresponding inferred class and a corresponding inferred bounding box;
   - for each detected object, computing a corresponding class uncertainty by performing class-conditional conformal prediction based on:
      ∘ at least one value, for said detected object, of a predetermined uncertainty heuristic related to the object detection model; and
      ∘ at least one predetermined class-related quantile;
   - for each detected object, computing corresponding bounding box uncertainties relating to the corresponding inferred bounding box by performing class-conditional conformal prediction based on:
      ∘ a corresponding prediction set of classes; and
      ∘ at least one predetermined bounding box-related quantile;
   - computing a corresponding image uncertainty score based on the class uncertainty and the bounding box uncertainties computed for at least one detected object of said image;
- selecting each image of the target dataset having an image uncertainty score that satisfies a predetermined criterion, thereby obtaining an image subset.

Indeed, thanks to the use of class-conditional conformal prediction, a rigorous quantification of uncertainties regarding outputs of the object detection model, based on input images, can be performed.

Since such uncertainties are rigorously quantified, their use as a selection criterion allows optimal selection of images to perform time and resource-efficient training for object detection tasks.

Consequently, in the case of active learning, this class-conditional conformal prediction framework can be used to improve the efficiency of the annotation, by providing, to the oracle, the most difficult images to annotate, that is, those with the largest image uncertainty scores. This framework can also improve the auto-labeling process by selecting images where low uncertainty is achieved.

Also, it could streamline the process of selecting frames in a video by selecting images where the model is having high levels of uncertainty.

According to other advantageous aspects of the invention, the method includes one or several of the following features, taken alone or in any technically possible combination:
each class-related quantile is determined by implementing the steps:
   - providing each image of an annotated calibration image set as input to the object detection model, an output of the object detection model including, for each object detected in said image, a corresponding inferred class;
   - for each image of the calibration image set, and for each detected object matching a ground truth object position, computing a corresponding class non-conformity score, the class non-conformity score depending on the predetermined uncertainty heuristic;
   - for each inferred class, computing a corresponding distribution of the class non-conformity score across the images of the calibration image set that have a detected object of said class;
   - for each inferred class, determining a (1-α_{c})-quantile of the corresponding class non-conformity score distribution, α_{c} having a predetermined value within the [0; 1] range, the determined (1-α_{c})-quantile forming the corresponding class-related quantile;
each bounding box-related quantile is determined by implementing the steps:
   - providing each image of an annotated calibration image set as input to the object detection model, an output of the object detection model including, for each object detected in said image, a corresponding bounding box;
   - for each detected object that matches a ground truth object, computing a corresponding bounding box non-conformity score based on the inferred bounding boxes;
   - for each bounding box coordinate, computing a corresponding distribution of the bounding box non-conformity score across the images of the calibration image set that have a detected object that matches a ground truth object;
   - for each ground truth class of the calibration image set, and for each bounding box coordinate, determining a (1-α_{b})-quantile of the corresponding bounding box non-conformity score distribution, α_{b} having a predetermined value within the [0; 1] range, the determined (1-α_{b})-quantile forming the corresponding bounding box-related quantile;
for each image of the target image set, and for each corresponding detected object, the associated class uncertainty depends on the corresponding prediction set of classes determined by implementing the steps:
   - for each class, computing the corresponding value of the uncertainty heuristic; and
   - including, in the prediction set, each class having a computed value of the uncertainty heuristic that is higher than 1 minus the corresponding class-related quantile;
   the class uncertainty preferably depending, for each detected object, on a size of the corresponding prediction set;
for each image of the target image set, and for each object detected in said image, the associated bounding box uncertainties depend on corresponding prediction intervals determined, for each bounding box coordinate, by implementing the steps:
   - performing a predetermined quantile selection strategy to select a bounding box-related quantile based on the classes in the prediction set associated with said detected object;
   - computing a prediction interval for said bounding box coordinate based on the selected bounding-box related quantile;
for each image, the corresponding image uncertainty score is computed as:
   - a weighted mean of:
      - the largest class uncertainty across the objects detected in said image; and
      - the largest bounding box uncertainty across the objects detected in said image; and/or
   - a maximum, a mean value and/or a sum of at least one intermediate object uncertainty score, each associated with a respective detected object, and computed as a combination of the corresponding class uncertainty and the corresponding bounding box uncertainties.

According to another aspect of the same invention, it is proposed a method for training an object detection model, the method including training a second object detection model based on an image subset of a target image set, the image subset having been previously obtained by performing the image selection method as previously defined using a first object detection model, based on said target image set.

According to other advantageous aspects of the invention, the method includes one or several of the following features, taken alone or in any technically possible combination:
the images of the target dataset are annotated, the image subset comprising the same images as the target image set, the selection step including sorting the images of the target image set according to an increasing uncertainty score to form the image subset, higher uncertainty scores being indicative of higher uncertainty, the second object detection model being the first detection model;
the method further comprises, before the step of training, providing each image of the image subset to an oracle to perform annotation of said image, the step of training being performed based on the obtained annotated image subset, the second object detection model being the first detection model;
the images in the image subset are the N images of the target dataset having the lowest uncertainty score, N being a predetermined integer, low uncertainty scores being indicative of low uncertainty,
   the method further comprising, before the step of training, for each image of the image subset, annotating each detected object in said image with the corresponding inferred class and the corresponding inferred bounding box, the second object detection model being distinct from the first detection model, the first object detection model being more precise than the second detection model;
the method further includes performing an additional iteration of the image selection method, based on the target image set, using the first object detection model obtained as a result of the last iteration of the training step.

According to another aspect of the same invention, it is proposed a computer program comprising instructions, which when executed by a computer, cause the computer to carry out the steps of the method according to the invention.

The computer program may be in any programming language such as C, C++, JAVA, Python, etc. Alternatively, the computer program may be in machine language.

The computer program may be stored in a non-transient memory, such as a USB stick, a flash memory, a hard-disc, a processor, a programmable electronic chip, etc.

The computer program may be stored in a computerized device such as a computer, a smartphone, a tablet, a server, etc.

According to another aspect of the same invention, it is proposed a computing system for selecting images in a target image set based on an object detection model, the target image set including at least one image, the computing system being configured to:
- for each image of the target image set:
   - provide said image as input to the object detection model, an output of the object detection model including, for each object detected in said image, a corresponding inferred class and a corresponding inferred bounding box;
   - for each detected object, compute a corresponding class uncertainty by performing class-conditional conformal prediction based on:
      ∘ at least one value, for said detected object, of a predetermined uncertainty heuristic related to the object detection model; and
      ∘ at least one predetermined class-related quantile;
   - for each detected object, compute corresponding bounding box uncertainties relating to the corresponding inferred bounding box by performing class-conditional conformal prediction based on:
      ∘ a corresponding prediction set of classes; and
      ∘ at least one predetermined bounding box-related quantile;
   - compute a corresponding image uncertainty score based on the class uncertainty and the bounding box uncertainties computed for at least one detected object of said image;
- select each image of the target dataset having an image uncertainty score that satisfies a predetermined criterion, thereby obtaining an image subset.

The system may be a personal device such as a smartphone, a tablet, a smartwatch, a computer, any wearable electronic device, etc.

The system according to the invention may execute one or several applications to carry out the method according to the invention.

The system according to the invention may be loaded with, and configured to execute, the computer program according to the invention.

### Brief description of the drawings

Other advantages and characteristics will become apparent on examination of the detailed description of an embodiment which is in no way limitative, and the attached figures, where:
figure 1 is a schematic representation of a computing system according to the invention;
figure 2 is a flowchart of configuration method performed by the computing system of figure 1;
figure 3 is a flowchart of an image selection method performed by the computing system of figure 1; and
figure 4 is a flowchart of a loop performed by the computing system of figure 1, including the image selection method of figure 3 and a training method.

It is well understood that the embodiments that will be described below are in no way limitative. In particular, it is possible to imagine variants of the invention comprising only a selection of the characteristics described hereinafter, in isolation from the other characteristics described, if this selection of characteristics is sufficient to confer a technical advantage or to differentiate the invention with respect to the state of the prior art. Such a selection comprises at least one, preferably functional, characteristic without structural details, or with only a part of the structural details if this part alone is sufficient to confer a technical advantage or to differentiate the invention with respect to the prior art.

In the figures, elements common to several figures retain the same reference.

### Detailed description

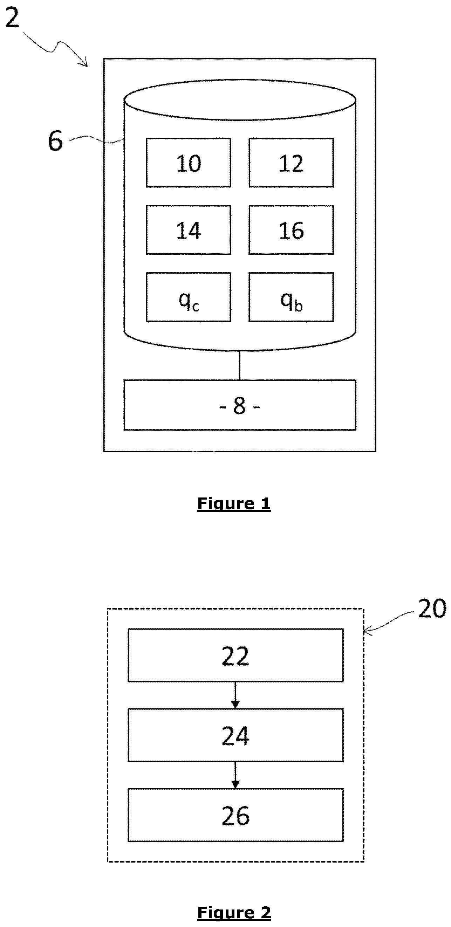

A computing system 2 according to the invention is shown on figure 1.

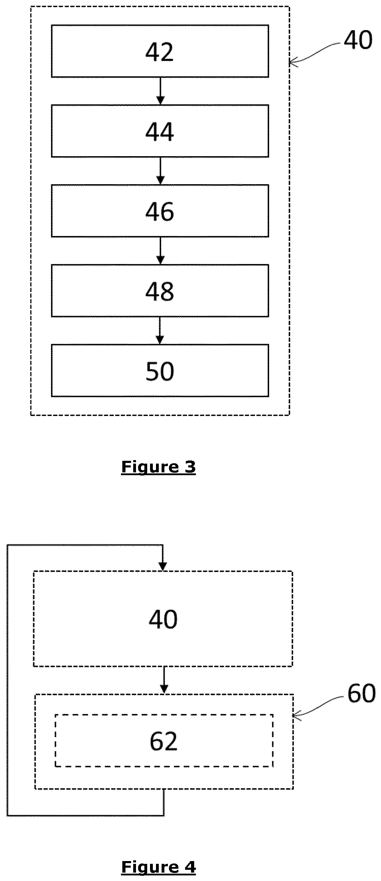

The computing system 2 is configured to perform an image selection method 40 (figure 3) for selecting images in a target image set (referenced 14) in order to build a second image set intended for training, and more specifically for fine-tuning, an object detection model.

The computing system 2 includes a memory 6 and processing unit 8.

The memory 6 is configured to store the aforementioned object detection model, associated with reference 10. For instance, the object detection model 10 is a version of the YOLO (*"You Only Look Once"*) algorithm or Faster R-CNN, both of which are known to the person skilled in the art. Nevertheless, it should be noted that the method according to the invention is agnostic to the object detection model.

The object detection model 10 is configured to receive an image as input. Furthermore, the object detection model 10 is configured to provide, as output, for each object detected in the received image, a corresponding class as well as a bounding box representative of the location of said detected object.

The object detection model 10 has been previously pretrained based on a training image set (which, depending on the case, may or may not be stored in the memory 6). Therefore, for each image of the training image set that is provided as input, the object detection model 10 is also provided, for each object represented in said image, with a corresponding class and a corresponding bounding box as expected outputs.

For instance, each inferred bounding box is defined by coordinates, in the associated image, of two opposite corners (in the format [xₘᵢₙ, yₘᵢₙ, xₘₐₓ, yₘₐₓ]). Alternatively, each inferred bounding box is defined by coordinates, in the associated image, of its center, associated with its width and height (in the format [Xcenter, ycenter, width, height]).

The memory 6 may also be configured to store a calibration image set 12, also referred to as "calibration dataset".

Each image of the calibration dataset 12 has been previously annotated. That is, each image of the calibration dataset 12 is associated, for each object represented in said image, with a corresponding class and a corresponding bounding box.

The calibration dataset 12 is intended to be used for the computation of class-related quantiles and bounding box-related quantiles. Nevertheless, said quantiles may have been previously computed, in which case they are stored in the memory 6, rather than the calibration dataset 12.

Preferably, data from the calibration dataset and from the target image set should be exchangeable (i.e., they have approximately the same distributions, that is same domain).

The memory 6 is also configured to store a target image set 14, further referred to as "target dataset". The images of the target dataset 14 are preferably not annotated.

Nevertheless, in the case of curriculum learning, which will be discussed below, the target dataset 14 is annotated.

### Configuration method 20

The processing unit 8 is preferably configured to carry out the steps of a preliminary configuration method 20 based on the calibration dataset 12, as will be described below.

The configuration method 20 aims at computing, starting from the calibration dataset 12, at least one class-related quantile and at least one bounding box-related quantile that will be used during the implementation of the image selection method 40.

Preferably, for each class, implementation of the configuration method 20 results in:
- a corresponding class-related quantile (further referred to as "class quantile"); and/or
- for at least one coordinate of a bounding box associated with a detected object of said class, a respective bounding box-related quantile (each being further referred to as "box quantile").

More precisely, the configuration method 20 comprises an inference step 22, a class quantile determination step 24 and a box quantile determination step 26.

### Inference step 22

The processing unit 8 is configured to provide, during the inference step 22, each image of the calibration dataset 12 as input to the object detection model 10.

Consequently, for each image provided as input, an output of the object detection model 10 includes, for each object detected in said image, a corresponding inferred class and a corresponding inferred bounding box. For instance, the output of the object detection model 10 further includes, for each bounding box, information representative of a confidence relating to the presence of an object in the bounding box.

### Class quantile determination step 24

The processing unit 8 is configured to determine, during the class quantile determination step 24, at least one class quantile (noted "q_{c}"), each relating to a respective class of the objects represented in the images of the calibration dataset 12.

Each class quantile q_{c} represents a confidence threshold that determines which class labels are included in a final prediction set of class labels. It ensures that said prediction set contains the true class with a predetermined (preferably high) probability 1-α_{c}, as will be disclosed below.

More precisely, the processing unit 8 is configured to perform class-conditional conformal prediction to determine each class quantile q_{c}.

The determination of each class quantile q_{c} using class-conditional conformal prediction is, for instance, described by Alexander Timans et al. in the digital prepublication "Adaptive Bounding Box Uncertainties via Two-Step Conformal Prediction", referenced arXiv:2403.07263.

Preferably, to perform such class-conditional conformal prediction, the processing unit 8 is configured to first compute the value of a first score function (also referred to as "class non-conformity score"), for each detected object that matches a ground truth object position. For instance, matching is performed using the Hungarian algorithm with an IoU (Intersection Over Union) threshold of 0.5.

Preferably, the first score function is defined so that large values encode large uncertainties.

In this case, the first score function is computed based on the inferred classes.

Said first score function has been previously defined by an operator based on an uncertainty heuristic related to the object detection model 10.

Conditions that the first score function should verify may include:
- the score output by the first score function should correlate well with actual uncertainty; and
- the score function should be monotonic, meaning that higher scores should correspond to worse predictions (i.e., more uncertainty).

Examples of such first score functions are provided in the aforementioned digital prepublication.

As a non-limitative example, said uncertainty heuristic is the softmax function (also known as the normalized exponential function). In this case, the first score function is, for instance, 1 - softmax(x)[y], where x is the image and y the index of the true class, that is 1 minus the softmax value for the true class (which is given by the labels, or annotations, of the calibration dataset 12).

The processing unit 8 is further configured to compute, for each class, a corresponding distribution of the class non-conformity score across the images that have an object of said class. Such feature allows to select box quantiles and propagate class errors in the bounding box uncertainties, as will be described below.

Moreover, the processing unit 8 is configured to compute, for each class, a (1-α_{c})-quantile (that is, the aforementioned class quantile q_{c}) of the class non-conformity score distribution. In this case, α_{c} (which represents a type I error) has a predetermined value within the [0; 1] range, preferably within the [0.01; 0.1] range.

The (1-α_{c})-quantile is the value q_{c} of the class non-conformity score for which the probability of the event "the class non-conformity score of a given class is lower than q_{c}" is equal to 1-α_{c}.

The processing unit 8 is further configured to store, for each class, the determined class quantile q_{c} in the memory 6.

### Box quantile determination step 26

Furthermore, the processing unit 8 is configured to determine, during the box quantile determination step 26, at least one box quantile q_{b} (i.e., one per bounding box coordinate) relating to each class of the objects represented in the images of the calibration dataset 12.

Each box quantile q_{b} represents a confidence threshold used as an uncertainty correction factor in the prediction interval determination, ensuring that the interval around the predicted bounding box covers the true bounding box with a predefined probability (1-α_{b}).

More precisely, the processing unit 8 is configured to perform class-conditional conformal prediction to determine each box quantile q_{b}.

The determination of each box quantile q_{b} using class-conditional conformal prediction is also described by Alexander Timans et al. in the aforementioned digital prepublication "Adaptive Bounding Box Uncertainties via Two-Step Conformal Prediction*".*

Preferably, to perform such class-conditional conformal prediction, the processing unit 8 is configured to first compute, for each detected object that matches a ground truth object, the value of a second score function (also referred to as "bounding box non-conformity score").

In this case, the second score function is computed based on the inferred bounding boxes.

Preferably, the second score function is defined so that large values encode large uncertainties.

Said second score function has been previously defined by an operator based on an uncertainty heuristic related to the object detection model 10.

Examples of such second score functions are provided in the aforementioned digital prepublication, and may include:
- regression residual (absolute values of the difference between inferred bounding box coordinates and ground truth of bounding box coordinates);
- ensemble methods where the score is derived from the mean and standard deviation of model ensembles (e.g., absolute value of difference between mean inferred bounding box coordinates and ground truth, normalized by an estimated standard deviation of model ensemble); or
- quantile regression, where quantiles are first estimated with a neural network, then corrected by the conformal prediction framework.

The processing unit 8 is further configured to compute, for each bounding box coordinate, a corresponding distribution of the bounding box non-conformity score across the images that have a detected object that matches a ground truth object.

Moreover, for each ground truth class, and for each bounding box coordinate, the processing unit 8 is configured to compute a (1-α_{b})-quantile (that is, the aforementioned box quantile q_{b}) of the bounding box non-conformity score distribution. In this case, α_{b} (which represents a type I error) has a predetermined value within the [0; 1] range, preferably within the [0.01; 0.1] range.

The processing unit 8 is further configured to store, for each class, each determined box quantile q_{b} in the memory 6.

### Image selection method 40

The processing unit 8 is configured to carry out the steps of the image selection method 40 based on the target dataset 14, as will be described below.

As mentioned above, the image selection method 40 is designed for building, starting from the target dataset 14, an image subset 16.

The image subset 16 is, for instance (but not exclusively), intended for further training the object detection model 10, with the aim of improving its performance towards an object detection task. The image subset 16 may also be used for training of another object detection model.

More precisely, the image selection method 40 comprises an inference step 42, a class uncertainty computation step 44, a bounding box uncertainty computation step 46, an image uncertainty computation step 48 and an image selection step 50.

### Inference step 42

The processing unit 8 is configured to provide, during the inference step 42, each image of the target dataset 14 as input to the object detection model 10.

Consequently, for each image provided as input, an output of the object detection model 10 includes, for each object detected in said image, a corresponding inferred class and a corresponding inferred bounding box.

### Class uncertainty computation step 44

For each image of the target dataset 14, and for each object detected in said image by the object detection model 10, the processing unit 8 is configured to compute, during the class uncertainty computation step 44, a class uncertainty, for the object detection model 10, relating to the corresponding inferred class.

More precisely, the processing unit 8 is configured to perform class-conditional conformal prediction to compute, for each detected object, the corresponding class uncertainty.

Preferably, to perform such class-conditional conformal prediction, the processing unit 8 is configured to compute, for each object detected in said image, a prediction set based on the aforementioned class quantiles q_{c}.

For each detected object, each class in the corresponding prediction set is derived from the aforementioned uncertainty heuristic and the aforementioned class quantiles q_{c} associated with the classes.

More precisely, for each detected object, the corresponding prediction set includes each class having a value of the uncertainty heuristic, for said object, that is higher than 1 minus the corresponding class quantile q_{c}.

Mathematically, this writes: {c : F(x)[c] ≥ 1-q_{c}, ∀c}, where F is the uncertainty heuristic.

Since, for each class, the corresponding class quantile q_{c} is fixed, but the value of the uncertainty heuristic changes from one object to the other, then the prediction set adapts to each object's uncertainty.

In other words, the prediction set is a set of inferred classes for which the event "the true class of the detected object belongs to the prediction set" has a probability higher than (1-α_{c}).

In this case, for each detected object, the processing unit 8 is configured to compute the class uncertainty based on the corresponding prediction set, for instance based on the size of the corresponding prediction set.

It should be noted that, for a given detected object, each class of the prediction set corresponds to inferred bounding box coordinate uncertainties (*i.e.,* an uncertainty for each bounding box coordinate), that may differ from the inferred bounding box uncertainties associated with another class of the prediction set.

In the following, the expression "bounding box uncertainties" will be used instead of "bounding box coordinates uncertainties" for conciseness.

### Bounding box uncertainty computation step 46

Furthermore, for each image of the target dataset 14, and for each object detected in said image by the object detection model 10, the processing unit 8 is configured to compute, during the bounding box uncertainty computation step 46, corresponding bounding box uncertainties, for the object detection model 10, relating to the corresponding inferred bounding box.

More precisely, the processing unit 8 is configured to perform class-conditional conformal prediction to compute, for each detected object, the corresponding bounding box uncertainties.

Preferably, to perform such class-conditional conformal prediction, the processing unit 8 is configured to compute, for each detected object, and for each coordinate of the corresponding inferred bounding box, the respective bounding box uncertainty based on the box quantile q_{b} associated with each class of the prediction set corresponding to said object. Such prediction set has been determined during the class uncertainty computation step 44, as mentioned previously.

In this case, for each detected object, the processing unit 8 is configured to perform a predetermined quantile selection strategy in order to select the appropriate conformal box quantiles q_{b} for the bounding box coordinates, based on the classes of the prediction set associated with said detected object.

For instance, the selected box quantile q_{b} is the greatest box quantile q_{b} across all classes in the prediction set (maximum bounding box quantile across all classes in the prediction set for each bounding box coordinate).

Furthermore, the processing unit 8 is configured a compute the prediction interval for each bounding box coordinate based on the aforementioned selected box quantiles. Each prediction interval may also be computed based on precomputed quantiles and quantities derived from model(s) prediction. Examples of derived quantities from model(s) prediction include inferred bounding box coordinates or mean and variance obtained from an ensemble of predictions or estimated quantile from the model (quantile regression).

For instance, the prediction interval is equal to the inferred coordinate +/- the selected box quantile for that coordinate.

For each detected object, and for each coordinate of the corresponding inferred bounding box, the corresponding computed prediction interval forms the corresponding bounding box uncertainty.

### Image uncertainty computation step 48

The processing unit 8 is also configured to compute, for each image of the target dataset 14, during the image uncertainty computation step 46, a corresponding image uncertainty score.

More precisely, for each image, the processing unit 8 is configured to compute the corresponding image uncertainty score based on the bounding box uncertainty and the class uncertainty associated with at least one object detected in said image.

Since there may be several objects detected in a single image, a method for computing such image uncertainty score has been previously defined by an operator, based on their needs. For example, if there is a need to select an image (during the subsequent association step) as soon as at least one detected object of the image is associated with a large uncertainty, then an approach using the max operator may be chosen.

As an example, for a given image of the target dataset 14, the corresponding image uncertainty score is computed as a linear combination (or weighted mean) of:
- the largest class uncertainty across the objects detected in said image; and
- the largest bounding box uncertainty across the objects detected in said image.

In this case, each of these quantities is associated with a respective weight which has preferably been obtained as a result of tuning or computed as a normalization factor.

In the example provided above, the processing unit 8 first aggregates class and object uncertainty scores separately using max operator for class and bounding box, then aggregates them with a linear combination (or sum, or mean). In this case, the largest image uncertainty scores correspond to images where the weighted mean of the largest bounding box uncertainty and largest class uncertainty (possibly from a different object than the object with the largest bounding box uncertainty) are the highest.

As another example, the processing unit 8 is configured to first compute an intermediate object uncertainty score for each object, by combining class and bounding box uncertainties for said object, then use the max operator across all object uncertainty scores. In this case, the largest image uncertainty scores correspond to images with at least one object with a large object uncertainty score.

Furthermore, if there is a need to select an image when most of the objects of the image are associated with a large uncertainty, then an approach using the mean operator may be chosen. Moreover, if there is a need to select an image when several objects associated with large uncertainties, then an approach using the sum operator may be chosen.

### Image selection step 50

The processing unit is also configured to identify and select, during the image selection step 50, the images of the target dataset 14 that have an image uncertainty score that satisfies a predetermined criterion.

For instance, said criterion is "the image uncertainty score belongs to a predetermined range", for instance the lowest third, or the highest third.

As another example, said criterion is "the image has an image uncertainty score that is higher than (respectively lower than) a predetermined threshold".

The processing unit 8 is further configured to include, in the image subset 16, each selected image of the target dataset 14.

As a result, the image subset 16 is obtained.

In the framework of auto-labelling, the processing unit 8 is configured to include, in the image subset 16, the N images of the target dataset 14 that have the lowest uncertainty score (N being a predetermined integer). In this case, low uncertainty scores are indicative of low uncertainty. Moreover, in this case, for each image in the image subset 16, the processing unit 8 is configured to annotate each object detected by the object detection model 10 is said image with the corresponding inferred class and the corresponding inferred bounding box.

In the framework of curriculum learning, the processing unit 8 is configured to iteratively include, in the image subset 16, the image that has the highest (or lowest) uncertainty score among the remaining images of the target dataset 14. Consequently the image subset 16 includes the same images as the target dataset 14, but with its images sorted by increasing (or decreasing) uncertainty score.

### Training method 60

Advantageously, the processing unit 8 is further configured to perform a training method 60, in order to further train a second object detection model.

For instance, the second object detection model is the object detection model 10 used to build the image subset 16. Nevertheless, the second object detection model may be different from the aforementioned object detection model 10, as will be discussed below with regards to auto-labelling.

More precisely, the processing unit 8 is configured to train, during a training step 62 (figure 4) of the training method 60, the second object detection model based on the image subset 16 obtained during an implementation of the image selection method 40, preferably the latest implementation of the image selection method 40.

Advantageously, the image selection method 40 and the training method 60 are performed successively over at least one iteration, in order to enhance the second object detection model.

Such feature is advantageous, since the second object detection model changes its prediction and its confidence along training (i.e., after each epoch).

Preferably, a new iteration of the image selection method 40 and the training method 60 may be performed based on the remaining (i.e., non-selected) images of the target dataset 14.

Preferably, in the framework of active learning, the second object detection model is the same as the aforementioned object detection model 10. Moreover, in this case, the target dataset 14 is not annotated.

In this case, after each iteration of the image selection method 40, the processing unit 8 is configured to provide the obtained image subset 16 to an oracle to perform annotation. Furthermore, the processing unit 8 is configured to train, during the current training step 62, the object detection model 10 based on the annotated image subset 16.

For instance, the object detection model 10 is trained based on the annotated image subset 16 that has been merged with the training image set used for the initial training of said object detection model 10.

In the framework of active learning, the total number of iterations is preferably limited to one.

Nevertheless, more iterations may be performed, as shown of figure 4. In this case, preferably, the image selection method 40 is performed based only on the remaining unannotated images of the target dataset 14.

Alternatively, in the framework of curriculum learning, the second object detection model is the same as the aforementioned object detection model 10. Moreover, in this case, the target dataset 14 is annotated.

In this case, the processing unit 8 is configured to provide, during such training, the images of the image subset 16 in batches, according to an increasing uncertainty score (i.e., for each batch, the corresponding uncertainty scores are higher than those of the previous batch), the detection model 10 being successively trained based on said batches. In this case, higher uncertainty scores are indicative of higher uncertainty.

In other words (as previously stated), the image selection step 50, in this case, aims to build an image subset 16 which is the target dataset 14 with the images sorted by increasing uncertainty score.

Similar principles may apply in the case of hierarchical learning.

Alternatively, in the framework of auto-labelling, the second object detection model is different from the aforementioned object detection model 10. Moreover, in this case, the target dataset 14 is non annotated.

Furthermore, in this case, the object detection model 10 is more precise than the second object detection model. Several precision metrics may be used, such as mAP@50, or, more generally, mean average precision (mAP).

Moreover, in this case, the processing unit 8 is configured to first annotate, before the training step 62, for each image of the image subset 16, each detected object in said image with the corresponding inferred class and the corresponding inferred bounding box obtained during the inference step 42.

In this case, the processing unit 8 is configured to train, during the training step 62, the second object detection model based on the obtained annotated image subset 16.

### Operation

Operation of the computing system 2 will now be disclosed with reference to the figures.

Preferably, the processing unit 8 first performs the configuration method 20 to determine each class quantile q_{c} and box quantile q_{b}.

More precisely, during the inference step 22, the processing unit 8 provides each image of the calibration dataset 12 as input to the object detection model 10 to obtain, for each image, and for each object detected in said image, a corresponding inferred class and a corresponding inferred bounding box.

Then, during the class quantile determination step 24, the processing unit 8 determines, for each class, a corresponding class quantile q_{c}.

Moreover, during the box quantile determination step 26, the processing unit 8 determines, for each class , at least one box quantile q_{b}.

Then, the processing unit 8 stores in the memory 6, for each class, the determined class quantile q_{c} and each determined box quantile q_{b}.

Alternatively, the class quantiles q_{c} and box quantiles q_{b} have been previously computed and are already available.

Moreover, the processing unit 8 performs the image selection method 40 to build an image subset 16 based on a target dataset 14.

More precisely, during the inference step 42, the processing unit 8 provides each image of the target dataset 14 as input to the object detection model 10 to obtain, for each image, and for each object detected in said image, a corresponding inferred class and a corresponding inferred bounding box.

Then, during the class uncertainty computation step 44, the processing unit 8 computes, for each image of the target dataset 14, and for each detected object, the class uncertainty relating to the corresponding inferred class.

As stated previously, to compute the class uncertainty, the processing unit 8 preferably determines, for each image, and for each object detected in said image, a prediction set as the set including the classes for which the value of the aforementioned uncertainty heuristic, for said object, is higher than 1 minus the corresponding class quantile q_{c}.

In this case, each class uncertainty depends on the corresponding prediction set.

Furthermore, during the bounding box uncertainty computation step 46, the processing unit 8 computes, for each image of the target dataset 14, and for each object detected in said image, corresponding bounding box uncertainties relating to the corresponding inferred bounding box, based on the box quantile q_{b} associated with each class of the prediction set corresponding to said object.

Then, during the image uncertainty computation step 46, the processing unit 8 computes, for each image of the target dataset 14, the corresponding image uncertainty score, based on the bounding box uncertainty and the class uncertainty associated with at least one object detected in said image.

Then, during the image selection step 50, the processing unit 8 identifies and selects the images of the target dataset 14 that have an image uncertainty score that satisfies a predetermined criterion. As a result, the image subset 16 is obtained.

Advantageously, the processing unit 8 performs the training method 60 based on the image subset 16.

More precisely, during the training step 62, the processing unit 8 trains a second object detection model based on the image subset 16 obtained during an implementation (preferably the latest) of the image selection method 40. Depending on the case, the second object detection model may (curriculum learning, active learning) or may not be (auto-labelling) the object detection model used to obtain the image subset 16 based on the target dataset 14.

Of course, the invention is not limited to the examples detailed above.

## Claims

1. A computer-implemented method (40) for selecting images in a target image set (14) based on an object detection model (10), the target image set (14) including at least one image,
the method comprising:
- for each image of the target image set (14):
• providing (42) said image as input to the object detection model (10), an output of the object detection model (10) including, for each object detected in said image, a corresponding inferred class and a corresponding inferred bounding box;
• for each detected object, computing (44) a corresponding class uncertainty by performing class-conditional conformal prediction based on:
∘ at least one value, for said detected object, of a predetermined uncertainty heuristic related to the object detection model (10); and
∘ at least one predetermined class-related quantile (q_{c});
• for each detected object, computing (46) corresponding bounding box uncertainties relating to the corresponding inferred bounding box by performing class-conditional conformal prediction based on:
∘ a corresponding prediction set of classes; and
∘ at least one predetermined bounding box-related quantile (qb);
• computing (48) a corresponding image uncertainty score based on the class uncertainty and the bounding box uncertainties computed for at least one detected object of said image;
- selecting (50) each image of the target dataset (14) having an image uncertainty score that satisfies a predetermined criterion, thereby obtaining an image subset (16).

2. The method according to claim 1, wherein each class-related quantile (q_{b}) is determined by implementing the steps:
- providing (22) each image of an annotated calibration image set (12) as input to the object detection model (10), an output of the object detection model (10) including, for each object detected in said image, a corresponding inferred class;
- for each image of the calibration image set (12), and for each detected object matching a ground truth object position, computing a corresponding class non-conformity score, the class non-conformity score depending on the predetermined uncertainty heuristic;
- for each inferred class, computing a corresponding distribution of the class non-conformity score across the images of the calibration image set (12) that have a detected object of said class;
- for each inferred class, determining a (1-α_{c})-quantile of the corresponding class non-conformity score distribution, α_{c} having a predetermined value within the [0; 1] range, the determined (1-α_{c})-quantile forming the corresponding class-related quantile (q_{c}).

3. The method according to claim 1 or 2, wherein each bounding box-related quantile (q_{b}) is determined by implementing the steps:
- providing (22) each image of an annotated calibration image set (12) as input to the object detection model (10), an output of the object detection model (10) including, for each object detected in said image, a corresponding bounding box;
- for each detected object that matches a ground truth object, computing a corresponding bounding box non-conformity score based on the inferred bounding boxes;
- for each bounding box coordinate, computing a corresponding distribution of the bounding box non-conformity score across the images of the calibration image set (12) that have a detected object that matches a ground truth object;
- for each ground truth class of the calibration image set (12), and for each bounding box coordinate, determining a (1-α_{b})-quantile of the corresponding bounding box non-conformity score distribution, α_{b} having a predetermined value within the [0; 1] range, the determined (1-α_{b})-quantile forming the corresponding bounding box-related quantile (q_{b}).

4. The method according to any one of claims 1 to 3, wherein, for each image of the target image set (14), and for each corresponding detected object, the associated class uncertainty depends on the corresponding prediction set of classes determined by implementing the steps:
- for each class, computing the corresponding value of the uncertainty heuristic; and
- including, in the prediction set, each class having a computed value of the uncertainty heuristic that is higher than 1 minus the corresponding class-related quantile (q_{c});
the class uncertainty preferably depending, for each detected object, on a size of the corresponding prediction set.

5. The method according to any one of claims 1 to 4, wherein, for each image of the target image set (14), and for each object detected in said image, the associated bounding box uncertainties depend on corresponding prediction intervals determined, for each bounding box coordinate, by implementing the steps:
- performing a predetermined quantile selection strategy to select a bounding box-related quantile (q_{b}) based on the classes in the prediction set associated with said detected object;
- computing a prediction interval for said bounding box coordinate based on the selected bounding-box related quantile (q_{b}).

6. The method according to any one of claims 1 to 5, wherein, for each image, the corresponding image uncertainty score is computed as:
- a weighted mean of:
• the largest class uncertainty across the objects detected in said image; and
• the largest bounding box uncertainty across the objects detected in said image; and/or
- a maximum, a mean value and/or a sum of at least one intermediate object uncertainty score, each associated with a respective detected object, and computed as a combination of the corresponding class uncertainty and the corresponding bounding box uncertainties.

7. A method (60) for training an object detection model, the method including training (62) a second object detection model based on an image subset (16) of a target image set (14), the image subset (16) having been previously obtained by performing the image selection method (40) according to any one of claims 1 to 6 using a first object detection model (10), based on said target image set (14).

8. The method according to claim 7, wherein the images of the target dataset (14) are annotated, the image subset (16) comprising the same images as the target image set (14), the selection step (50) including sorting the images of the target image set (14) according to an increasing uncertainty score to form the image subset (16), higher uncertainty scores being indicative of higher uncertainty, the second object detection model being the first detection model (10).

9. The method according to claim 7, further comprising, before the step of training (62), providing each image of the image subset (16) to an oracle to perform annotation of said image, the step of training (62) being performed based on the obtained annotated image subset (16), the second object detection model being the first detection model (10).

10. The method according to claim 7, wherein the images in the image subset (16) are the N images of the target dataset (14) having the lowest uncertainty score, N being a predetermined integer, low uncertainty scores being indicative of low uncertainty,
the method further comprising, before the step of training (62), for each image of the image subset (16), annotating each detected object in said image with the corresponding inferred class and the corresponding inferred bounding box, the second object detection model being distinct from the first detection model (10), the first object detection model being more precise than the second detection model (10).

11. The method according to claim 9, further including performing an additional iteration of the image selection method (40), based on the target image set (14), using the first object detection model (10) obtained as a result of the last iteration of the training step (62).

12. A computer program comprising instructions, which when executed by a computer, cause the computer to carry out the steps of the method of any one of claims 1 to 11.

13. A computing system (2) for selecting images in a target image set (14) based on an object detection model (10), the target image set (14) including at least one image,
the computing system (2) being configured to:
- for each image of the target image set (14):
• provide (42) said image as input to the object detection model (10), an output of the object detection model (10) including, for each object detected in said image, a corresponding inferred class and a corresponding inferred bounding box;
• for each detected object, compute (44) a corresponding class uncertainty by performing class-conditional conformal prediction based on:
∘ at least one value, for said detected object, of a predetermined uncertainty heuristic related to the object detection model (10); and
∘ at least one predetermined class-related quantile (q_{c});
• for each detected object, compute (46) corresponding bounding box uncertainties relating to the corresponding inferred bounding box by performing class-conditional conformal prediction based on:
∘ a corresponding prediction set of classes; and
∘ at least one predetermined bounding box-related quantile (qb);
• compute (48) a corresponding image uncertainty score based on the class uncertainty and the bounding box uncertainties computed for at least one detected object of said image;
- select (50) each image of the target dataset (14) having an image uncertainty score that satisfies a predetermined criterion, thereby obtaining an image subset (16).
